(19) Europäisches Patentamt
European Patent Office
Office européen des brevets

(11) **EP 4 725 909 A1**

(12) **EUROPEAN PATENT APPLICATION**
published in accordance with Art. 153(4) EPC

(43) Date of publication:
**15.04.2026 Bulletin 2026/16**

(51) International Patent Classification (IPC):
***C01G 51/00*** *(2025.01)* ***H01M 4/525*** *(2010.01)*

(21) Application number: **24819248.6**

(52) Cooperative Patent Classification (CPC):
Y02E 60/10

(22) Date of filing: **30.05.2024**

(86) International application number:
**PCT/JP2024/019900**

(87) International publication number:
**WO 2024/253018 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.06.2023 JP 2023094848**

(71) Applicant: **Nippon Chemical Industrial Co., Ltd.
Tokyo 136-8515 (JP)**

(72) Inventors:
• **TAKAHASHI, Chihiro
Tokyo 136-8515 (JP)**
• **KIKUCHI, Masahiro
Tokyo 136-8515 (JP)**

(74) Representative: **Page White Farrer
Bedford House
21a John Street
London WC1N 2BF (GB)**

(54) **METHOD FOR PRODUCING LITHIUM COBALT-BASED COMPOSITE OXIDE PARTICLES**

(57) Provided is a method for producing lithium-cobalt-based composite oxide particles capable of reducing the weight and thickness of a positive electrode material when used as a positive electrode active material for a non-aqueous lithium secondary battery or an all-solid-state battery. The method for producing lithium-cobalt-based composite oxide particles includes: a thermally decomposing step of thermally decomposing a raw material cobalt compound having an average particle diameter as determined by SEM observation of 0.05 to 1.00 $\mu$m to obtain an oxide of cobalt, the raw material cobalt being cobalt hydroxide or a salt of cobalt; a mixture preparing step of preparing a mixture containing at least a lithium compound and the oxide of cobalt obtained in the thermally decomposing step; and a firing step of firing the mixture prepared in the mixture preparing step at 500 to 850°C.

EP 4 725 909 A1

## Description

Technical Field

The present invention relates to a method for producing lithium-cobalt-based composite oxide particles useful as a positive electrode material for non-aqueous lithium secondary batteries, all-solid-state batteries, and the like.

Background Art

Non-aqueous lithium secondary batteries are used as power sources for mobile devices, notebook-type personal computers, electric cars, industrial robots, and the like. Further, instead of non-aqueous lithium secondary batteries using an electrolyte containing a flammable organic solvent, all-solid-state batteries using a safer solid electrolyte have actively been developed in recent years.

Recently, these non-aqueous lithium secondary batteries and all-solid-state batteries are required to have a lighter weight and a smaller thickness depending on their intended uses. In order to reduce the weight and thickness of a battery, members constituting the battery need to be made smaller in size. For example, reducing the size of a positive electrode material is one of factors to reduce the weight and thickness of a battery.

As for reducing the size of a positive electrode material, for example, Patent Literature 1 discloses an electrode member including a thin-film-shaped positive electrode active material layer formed of fine particles of an oxide-based positive electrode active material that contains 0.5 vol% or more of particles whose 10% particle diameter ($D_{10}$) and 50% particle diameter ($D_{50}$) in a volume-based cumulative particle size distribution are respectively 0.01 $\mu$m to 0.5 $\mu$m and 0.01 $\mu$m to 1.0 $\mu$m and whose particle diameter is 0.12 $\mu$m or less. In Patent Literature 1, there is no specific description about a production method to obtain the positive electrode active material, but Patent Literature 1 indicates that the thickness of an electrode member can be reduced by using a nano-level positive electrode active material.

As for obtaining a nano-level lithium-based composite oxide as a positive electrode active material, Patent literature 2 discloses that a nano-level lithium-based composite oxide is synthesized using a molten salt as a reactant and a reaction medium through a process including a drying step. Patent Literature 2 describes that as compared to conventional larger materials, such a nano-level lithium-based composite oxide makes it possible to achieve higher functions and develop new functions and to aim at reducing the size of an electronic device.

Citation List

Patent Literature

Patent Literature 1
Japanese Patent Laid-Open No. 2019-220468
Patent Literature 2
Japanese Patent Laid-Open No. 2008-105912

Summary of Invention

Technical Problem

The method disclosed in Patent Literature 2 utilizes the fact that metal ions as a raw material are present in a completely dissociated state in a molten salt and are therefore present in a state where they are mixed at the ion level, which makes it easy to form a stable material by chemical thermodynamic equilibrium even when heat treatment is performed at a relatively low temperature.

However, a lithium-cobalt-based composite oxide is usually obtained by a so-called solid-phase process in which a plurality of raw material powders are mixed and fired, and a high firing temperature is required to sufficiently react the raw material powders. This progresses crystallization, but at the same time, grain growth occurs so that lithium-cobalt-based composite oxide particles have a large particle diameter, which, as a result, makes it difficult to reduce the weight and thickness of a positive electrode material.

It is therefore an object of the present invention to provide a method for producing lithium-cobalt-based composite oxide particles obtained by a solid-phase process and capable of reducing the weight and thickness of a positive electrode material when used as a positive electrode active material for a non-aqueous lithium secondary battery or an all-solid-state battery.

Solution to Problem

In light of such circumstances, the present inventors have intensively studied and, as a result, have found that an oxide of cobalt obtained by thermally decomposing nano-level fine particles of a raw material cobalt compound selected from among a hydroxide of cobalt and a salt of cobalt hardly generates gas during firing and is composed of nano-level fine particles due to the cobalt compound used and that the use of the oxide of cobalt composed of nano-level fine particles obtained by thermally decomposing the raw material cobalt compound allows a reaction with a lithium compound to readily proceed so that crystallization well proceeds even by low-temperature firing. This finding has led to the completion of the present invention.

Specifically, the present invention (1) provides a method for producing lithium-cobalt-based composite oxide particles, the method including:

a thermally decomposing step of thermally decomposing a raw material cobalt compound having an average particle diameter as determined by SEM observation of 0.05 to 1.00 $\mu$m to obtain an oxide of cobalt, the raw material cobalt being cobalt hydroxide or a salt of cobalt;
a mixture preparing step of preparing a mixture containing at least a lithium compound and the oxide of cobalt obtained in the thermally decomposing step; and
a firing step of firing the mixture prepared in the mixture preparing step at 500 to 850°C.

The present invention (2) provides the method for producing lithium-cobalt-based composite oxide particles according to (1), wherein the raw material cobalt compound is cobalt hydroxide.

The present invention (3) provides the method for producing lithium-cobalt-based composite oxide particles according to (1) or (2), wherein the lithium compound is at least one selected from among a carbonate, a hydroxide, an acetate, and a nitrate of lithium.

The present invention (4) provides the method for producing lithium-cobalt-based composite oxide particles according to (1) or (2), wherein in the thermally decomposing step, thermal decomposition is performed at 200 to 1000°C.

The present invention (5) provides the method for producing lithium-cobalt-based composite oxide particles according to (1) or (2), wherein the oxide of cobalt has an average particle diameter as determined by SEM observation of 0.05 to 4.00 $\mu$m.

The present invention (6) provides the method for producing lithium-cobalt-based composite oxide particles according to (1) or (2), wherein after the firing step, a fired product pulverizing treatment step is performed in which lithium-cobalt-based composite oxide particles obtained by performing the firing step are subjected to pulverizing treatment.

The present invention (7) provides the method for producing lithium-cobalt-based composite oxide particles according to (1) or (2), wherein lithium-cobalt-based composite oxide particles obtained by performing the method for producing a lithium-cobalt-based composite oxide according to claim 1 or 2 have an average particle diameter as determined by SEM observation of 0.10 to 5.00 $\mu$m and show a weight loss on heating at 850°C of 1.5 mass% or less.

The present invention (8) provides the method for producing lithium-cobalt-based composite oxide particles according to (1) or (2), wherein lithium-cobalt-based composite oxide particles obtained by performing the method for producing a lithium-cobalt-based composite oxide according to claim 1 or 2 have a residual alkali content of 2.0% or less.

The present invention (9) provides the method for producing lithium-cobalt-based composite oxide particles according to (1) or (2), wherein lithium-cobalt-based composite oxide particles obtained by performing the method for producing a lithium-cobalt-based composite oxide according to claim 1 or 2 have a CV value of an average particle diameter as determined by SEM observation of 0.60 or less, and when the lithium-cobalt-based composite oxide particles are subjected to X-ray diffraction analysis, an impurity phase other than a hexagonal crystal phase (R-3m) derived from a lithium-cobalt-based composite oxide does not appear.

The present invention (10) provides the method for producing lithium-cobalt-based composite oxide particles according to (1) or (2), wherein lithium-cobalt-based composite oxide particles obtained by performing the method for producing a lithium-cobalt-based composite oxide according to claim 1 or 2 are lithium-cobalt-based composite oxide particles obtained by a solid-phase process.

Advantageous Effects of Invention

The present invention makes it possible to provide a method for producing lithium-cobalt-based composite oxide particles obtained by a solid-phase process and capable of reducing the weight and thickness of a positive electrode material when used as a positive electrode active material for a non-aqueous lithium secondary battery or an all-solid-state battery.

Brief Description of Drawings

[Figure 1] Figure 1 is an X-ray diffraction chart of lithium-cobalt-based composite oxide particles obtained in Examples 1 to 6.
[Figure 2] Figure 2 is an X-ray diffraction chart of lithium-cobalt-based composite oxide particles obtained in Examples 7 to 10.
[Figure 3] Figure 3 is an X-ray diffraction chart of lithium-cobalt-based composite oxide particles obtained in Comparative Examples 1 and 2.

Description of Embodiments

Hereinbelow, the present invention will be described on the basis of preferred embodiments.

A method for producing lithium-cobalt-based composite oxide particles of the present invention includes:

a thermally decomposing step of thermally decomposing a raw material cobalt compound having an average particle diameter as determined by SEM observation of 0.05 to 1.00 $\mu$m to obtain an oxide of cobalt, the raw material cobalt being cobalt hydroxide or a salt of cobalt;
a mixture preparing step of preparing a mixture containing at least a lithium compound and the oxide of cobalt compound obtained as a thermally-decomposed product in the thermally decomposing step; and
a firing step of firing the mixture prepared in the mixture preparing step at 500 to 850°C.

The thermally decomposing step according to the method for producing lithium-cobalt-based composite oxide particles of the present invention is a step in which cobalt hydroxide or a salt of cobalt is used as a raw material cobalt compound, and a step of thermally decomposing the raw material cobalt compound to obtain an oxide of cobalt. That is, the thermally decomposing step is a step of thermally decomposing cobalt hydroxide or a salt of cobalt as a raw material cobalt compound by heating to obtain an oxide of cobalt as a thermally-decomposed product.

Examples of the raw material cobalt compound used in the thermally decomposing step include cobalt hydroxide and salts of cobalt such as a carbonate of cobalt, an organic acid salt of cobalt, and a nitrate of cobalt.

Among these raw material cobalt compounds, from the viewpoint that a cobalt compound hardly generates gas, which is considered as one of factors that inhibit a firing reaction, during firing and is composed of nano-level fine particles due to the cobalt compound used, preferred is a raw material cobalt compound from which an oxide of cobalt, such as tricobalt tetraoxide, is obtained as a thermally-decomposed product, and from the viewpoint that single particles have a small particle diameter, and therefore it is not necessary to previously perform pulverizing treatment or the like to adjust their particle diameters, particularly preferred is cobalt hydroxide.

It should be noted that the raw material cobalt compound used in the thermally decomposing step is not limited by its production history, but its impurity content is preferably as low as possible to produce high-purity lithium-cobalt-based composite oxide particles.

The average particle diameter as determined by SEM observation of the raw material cobalt compound used in the thermally decomposing step is 0.05 to 1.00 $\mu$m, preferably 0.05 to 0.50 $\mu$m. When the average particle diameter as determined by SEM observation of the raw material cobalt compound used in the thermally decomposing step is within the above range, lithium-cobalt-based composite oxide particles obtained by performing the method for producing lithium-cobalt-based composite oxide particles of the present invention can have an average particle diameter as determined by SEM observation of 0.10 to 5.00 $\mu$m, preferably 0.10 to 3.50 $\mu$m.

A thermal decomposition temperature in the thermally decomposing step is not limited as long as the raw material cobalt compound is decomposed. For example, the thermal decomposition temperature in the thermally decomposing step is 200 to 1000°C. When the raw material cobalt compound having an average particle diameter as determined by SEM observation of 0.05 to 1.00 $\mu$m, preferably 0.05 to 0.50 $\mu$m is heated at a temperature at which the raw material cobalt compound is thermally decomposed, it is possible to obtain an oxide of cobalt having a small CV value (standard deviation/average particle diameter) of a particle size distribution as determined by SEM observation, that is, an oxide of cobalt having a small variation in particle diameter, and when the subsequent steps of the method for producing lithium-cobalt-based composite oxide particles of the present invention are performed using the obtained oxide of cobalt, it is possible to obtain lithium-cobalt-based composite oxide particles having a small CV value. Therefore, when lithium-cobalt-based composite oxide particles obtained by a solid-phase process in the method for producing lithium-cobalt-based composite oxide particles of the present invention are used as a positive electrode active material for a non-aqueous lithium secondary battery or an all-solid-state battery, a problem is less likely to occur during production of a positive electrode material, and the effect of easily reducing the weight and thickness of a positive electrode material is enhanced.

Further, in the method for producing lithium-cobalt-based composite oxide particles of the present invention, reactivity does not vary due to the use of an oxide of cobalt having a small CV value, and therefore it is possible to obtain, even at a relatively low firing temperature, lithium-cobalt-based composite oxide particles that do not have an impurity phase other than a hexagonal crystal phase (R-3m) derived from a lithium-cobalt-based composite oxide when subjected to X-ray diffraction analysis using CuKα rays as a radiation source.

It should be noted that the hexagonal crystal phase (R-3m) derived from the lithium-cobalt-based composite oxide refers to diffraction peaks resulting from $LiCoO_2$ observed at $2\theta$ = about 18.9° (18.9 ± 0.2°), about 37.4° (37.4 ± 0.2°), about 38.4° (38.4 ± 0.2°), about 39.1° (39.1 ± 0.2°), about 45.3° (45.3 ± 0.2°), about 49.5° (49.5 ± 0.2°), about 59.6° (59.6 ± 0.2°), about 65.5° (65.5 ± 0.2°), about 66.4° (66.4 ± 0.2°), and about 69.8° (69.8 ± 0.2°). The impurity phase refers to diffraction peaks other than the diffraction peaks resulting from $LiCoO_2$. Specific examples of such an impurity phase include cobalt oxide ($Co_3O_4$) having a main peak at about 36.8° (36.8 ± 0.2°), lithium carbonate ($Li_2CO_3$) having a main peak at about 31.8° (31.8 ± 0.2°), and a cubic lithium-cobalt-based composite oxide (cubic $LiCoO_2$) having a main peak at about 19.2° (19.2 ± 0.2°).

The thermal decomposition temperature in the thermally decomposing step is 200 to 1000°C, preferably 200 to 850°C, more preferably 200 to 700°C. When the thermal decomposition temperature in the thermally decomposing step is within the above range, it is possible to obtain an oxide of cobalt having a small CV value of a particle size distribution as determined by SEM observation, and when the subsequent steps of the method for producing lithium-cobalt-based composite oxide particles of the present invention are performed using the obtained oxide of cobalt, it is possible to obtain lithium-cobalt-based composite oxide particles having a small CV value of a particle size distribution as determined by SEM observation. Therefore, when lithium-cobalt-based composite oxide particles obtained by a solid-phase process in the method for producing lithium-cobalt-based composite oxide particles of the present invention in which the thermal decomposition temperature in the thermally decomposing step is within the above range are used as a positive electrode active material for a non-aqueous lithium secondary battery or an all-solid-state battery, a problem is less likely to occur during production of a positive electrode material, and the effect of easily reducing the weight and thickness of a positive electrode material is enhanced.

Further, when the thermal decomposition temperature in the thermally decomposing step is, for example, 200 to 700°C, an oxide of cobalt is readily obtained while coarsening of the raw material cobalt compound is prevented, which makes it possible to obtain an oxide of cobalt having a small average particle diameter as determined by SEM observation of 0.05 to 1.50 μm, preferably 0.05 to 1.00 μm, and when the subsequent steps of the method for producing lithium-cobalt-based composite oxide particles of the present invention are performed using the obtained oxide of cobalt, it is possible to obtain lithium-cobalt-based composite oxide particles having a small average particle diameter as determined by SEM observation of 0.10 to 2.00 μm, preferably 0.10 to 1.00 μm. Therefore, it is possible to provide a method for producing lithium-cobalt-based composite oxide particles capable of reducing the weight and thickness of a positive electrode material when used as a positive electrode active material for a non-aqueous lithium secondary battery or an all-solid-state battery.

A thermal decomposition time in the thermally decomposing step is 1 to 10 hours, preferably 2 to 5 hours. A thermal decomposition atmosphere in the thermally decomposing step is preferably an oxidative atmosphere such as air or oxygen gas.

The oxide of cobalt obtained by performing the thermally decomposing step is $Co_3O_4$, CoO, $Co_2O_3$, or the like, and is preferably $Co_3O_4$.

The average particle diameter as determined by SEM observation of the oxide of cobalt obtained by performing the thermally decomposing step is 0.05 to 4.00 μm, preferably 0.05 to 3.00 μm. When the average particle diameter of the oxide of cobalt obtained by performing the thermally decomposing step is within the above range, it is possible to obtain lithium-cobalt-based composite oxide particles having an average particle diameter as determined by SEM observation of 0.10 to 5.00 μm, preferably 0.10 to 3.50 μm through the subsequent steps.

The CV value (standard deviation/average particle diameter) of particle size distribution as determined by SEM observation of the oxide of cobalt obtained in the thermally decomposing step is 0.60 or less, preferably 0.50 or less, particularly preferably 0.40 or less. When the CV value of the oxide of cobalt obtained in the thermally decomposing step is within the above range, it is possible to obtain lithium-cobalt-based composite oxide particles having a CV value of a particle size distribution as determined by SEM observation of 0.60 or less, preferably 0.50 or less, particularly preferably 0.45 or less through the subsequent steps.

It should be noted that in the present invention, the average particle diameters as determined by SEM observation of the raw material cobalt compound used in the thermally decomposing step, the lithium-cobalt-based composite oxide particles obtained by performing the method for producing lithium-cobalt-based composite oxide particles of the present invention, the oxide of cobalt obtained by performing the thermally decomposing step, and the lithium compound are average particle diameters of primary particles as determined from a scanning electron microscope (SEM) photograph unless otherwise specified, and the average particle diameter of primary particles is determined by randomly selecting 100 primary particles under observation with a scanning electron microscope (SEM), measuring the horizontal Feret's diameter of each of the particles, and determining the average of horizontal Feret's diameter of the 100 particles as an average particle diameter of primary particles.

Further, in the present invention, the standard deviations and CV values of the lithium-cobalt-based composite oxide particles obtained by performing the method for producing lithium-cobalt-based composite oxide particles of the present invention and the oxide of cobalt obtained by performing the thermally decomposing step are standard deviations and CV values of primary particles as determined from a scanning electron microscope (SEM) photograph unless otherwise specified, and the standard deviation and CV value of primary particles are determined by randomly selecting 100 primary particles under observation with a scanning electron microscope (SEM), measuring the horizontal Feret's diameter of each of the particles to determine the particles diameters of the 100 primary particles and obtain the particle size distribution of the 100 particles, and determining an average particle diameter, a standard deviation, and a CV value from the particle size distribution.

The mixture preparing step according to the method for producing lithium-cobalt-based composite oxide particles of the present invention is a step of preparing a mixture containing at least a lithium compound and the oxide of cobalt obtained in the thermally decomposing step.

The lithium compound used in the mixture preparing step is not limited as long as it is a lithium compound used as a raw material for producing lithium-cobalt-based composite oxide particles, and examples thereof include an oxide, a hydroxide, a carbonate, a nitrate, a sulfate, and an organic oxide salt of lithium.

The average particle diameter as determined by SEM observation of the lithium compound used in the mixture preparing step is 0.1 to 100.0 $\mu$m, preferably 0.1 to 10.0 $\mu$m, particularly preferably 0.1 to 1.0 $\mu$m. When the average particle diameter determined by SEM observation of the lithium compound used in the mixture preparing step is within the above range, homogenization during firing is achieved so that lithium-cobalt-based composite oxide particles having a single phase are likely to be obtained.

In the mixture preparing step, the amounts of the lithium compound and the oxide of cobalt are adjusted in such a manner that the atomic mole ratio of Li to Co (Li/Co) in the mixture is 0.90 to 1.20, preferably 0.95 to 1.15. When the atomic mole ratio of Li to Co (Li/Co) in the mixture is within the above range, lithium-cobalt-based composite oxide particles having a single phase are likely to be obtained.

In the mixture preparing step, the mixture may optionally contain a compound containing an M element. Examples of the compound containing an M element include an oxide, a hydroxide, a carbonate, a nitrate, a sulfate, a fluoride, and an organic acid salt which contain an M element. The compound containing an M element may be a compound containing two or more M elements. The M element is one or more of Mg, Al, Ti, Zr, Cu, Fe, Sr, Ca, V, Mo, Bi, Nb, Si, Zn, Ga, Ge, Sn, Ba, W, Na, K, Ni, Mn, and the like.

When the mixture optionally contains the M-element containing compound in the mixture preparing step, the atomic mole percentage of the M element to Co in the mixture (($M/Co$) $\times$ 100) is preferably adjusted to 0.01 to 5.00 mol%, particularly preferably to 0.05 to 2.00 mol%. When the atomic mole percentage of the M element to Co in the mixture (($M/Co$) $\times$ 100) is within the above range, it is possible to obtain lithium-cobalt-based composite oxide particles capable of improving battery characteristics without impairing a charge-discharge capacity. It should be noted that when the mixture contains two or more M elements, the number of atomic moles of the M element as a base for calculating the mole percentage refers to the sum of the numbers of atomic moles of the respective M elements.

It should be noted that the lithium compound and the M element-containing compound used in the mixture preparing step are not limited by their production history, but their impurity contents are preferably as low as possible to produce high-purity lithium-cobalt-based composite oxide particles.

In the mixture preparing step, the lithium compound, the oxide of cobalt, and the M element-containing compound optionally used are mixed by a dry or wet method to prepare a mixture.

At this time, the oxide of cobalt is allowed to be present so that the average particle diameter as determined by SEM observation of the oxide of cobalt in the mixture is 0.05 to 4.00 $\mu$m, preferably 0.05 to 3.00 $\mu$m, and the lithium compound and the M element-containing compound optionally used are mixed by treatment such as stirring or pulverization. Such mixing makes it easy to bring the lithium compound, the oxide of cobalt, and the M element-containing compound optionally used into contact with each other. When the average particle diameter as determined by SEM observation of the oxide of cobalt in the mixture is within the above range, the reactivity of the mixture in the firing step can be increased, and therefore even when the mixture is fired at a low temperature of, for example, 500 to 850°C, a reaction is allowed to sufficiently proceed.

In the present production method, particle size adjustment may be performed when mixing treatment is performed in the mixture preparing step. The mixing treatment may be achieved by performing pulverizing treatment. For example, the following methods may be used: (i) a method in which the oxide of cobalt is subjected to pulverizing treatment to adjust its particle diameter before mixing the lithium compound, the oxide of cobalt, and the M element-containing compound optionally used, and then the oxide of cobalt after pulverizing treatment, the lithium compound, and the M element-containing compound optionally used are mixed; (ii) a method in which the lithium compound is subjected to pulverizing treatment to adjust its particle diameter before mixing the lithium compound, the oxide of cobalt, and the M element-containing compound optionally used, and then the lithium compound after pulverizing treatment, the oxide of cobalt, and the M element-containing compound optionally used are mixed; (iii) a method in which the oxide of cobalt is subjected to pulverizing treatment before mixing the lithium compound, the oxide of cobalt, and the M element-containing compound optionally used, the lithium compound and/or the M element-containing compound are/is also subjected to pulverizing treatment, and then the oxide of cobalt, the lithium compound and the M element-containing compound optionally used after pulverizing treatment are mixed; and (iv) a method in which the lithium compound, the oxide of cobalt, and the M element-containing compound optionally used are mixed and subjected to mixing and pulverizing treatment.

It should be noted that the pulverizing treatment of the oxide of cobalt, the lithium compound, or the M element-containing compound and the mixing and pulverizing treatment of the oxide of cobalt, the lithium compound, and the M element-containing compound optionally used may either be dry or wet.

Examples of a device for performing dry mixing treatment, pulverizing treatment or mixing and pulverizing treatment include a jet mill, a pin mill, a roll mill, a ball mill, and a bead mill. It should be noted that in a laboratory, a table mixer may be used. Examples of a device for performing wet mixing treatment, pulverizing treatment, or mixing and pulverizing treatment include a ball mill and a bead mill.

When prepared by a wet method, the mixture is preferably dried. As a drying method, an ordinary method is used. When wet mixing treatment, pulverizing treatment, or mixing and pulverizing treatment is performed, for example, a method using a spray drier can be used.

The firing step according to the method for producing lithium-cobalt-based composite oxide particles of the present invention is a step of firing the mixture prepared in the mixture preparing step to obtain lithium-cobalt-based composite oxide particles.

A firing temperature in the firing step is 500 to 850°C, preferably 550 to 800°C. When the firing temperature in the firing step is within the above range, it is possible to obtain lithium-cobalt-based composite oxide particles capable of reducing the weight and thickness of a positive electrode material when used as a positive electrode active material for a non-aqueous lithium secondary battery or an all-solid-state battery.

By lowering the firing temperature in the firing step, grain growth in the firing step can be suppressed, but if the firing temperature in the firing step is excessively lowered to attempt to suppress grain growth too much, the mixture does not sufficiently react. Further, when lithium-cobalt-based composite oxide particles obtained by such a poor reaction of the mixture are used, not only does a problem occur during production of a positive electrode material, but also a charge-discharge capacity expected of the lithium-cobalt-based composite oxide particles is reduced. On the other hand, lithium-cobalt-based composite oxide particles obtained by performing the method for producing lithium-cobalt-based composite oxide particles of the present invention are produced by performing the thermally decomposing step and the mixture preparing step to increase the reactivity of the mixture in the firing step. Therefore, the reaction sufficiently proceeds, which makes it possible to prevent the occurrence of a problem during production of a positive electrode material and a reduction in charge-discharge capacity expected of the lithium-cobalt-based composite oxide particles.

Further, it is particularly preferred that the firing temperature in the firing step is 500 to 850°C, preferably 550 to 800°C from the viewpoint of obtaining lithium-cobalt-based composite oxide particles not having an impurity phase other than a hexagonal crystal phase (R-3m) derived from a lithium-cobalt-based composite oxide when subjected to X-ray diffraction analysis using CuK$\alpha$ rays as a radiation source.

A firing time in the firing step is 1 to 30 hours, preferably 3 to 20 hours. A firing atmosphere in the firing step is an oxidative atmosphere such as air or oxygen gas. In the firing step, a fired product obtained by first firing may be fired more than once, if necessary.

In the method for producing lithium-cobalt-based composite oxide particles of the present invention, a fired product pulverizing treatment step, in which lithium-cobalt-based composite oxide particles obtained by the firing step are subjected to pulverizing treatment, may optionally be performed after the firing step.

The pulverizing treatment in the fired product pulverizing treatment step may either be dry pulverizing treatment or wet pulverizing treatment. Examples of a wet pulverizing device include a ball mill and a bead mill. Examples of a dry pulverizing device include publicly-known pulverizing devices such as a jet mill, a pin mill, a roll mill, a ball mill, and a bead mill.

Lithium-cobalt-based composite oxide particles obtained by performing the method for producing lithium-cobalt-based composite oxide particles of the present invention have the following preferred physical properties: an impurity phase other than a hexagonal crystal phase (R-3m) derived from a lithium-cobalt-based composite oxide does not appear in X-ray diffraction analysis using CuK$\alpha$ rays as a radiation source; and their average particle diameter as determined by SEM observation is 0.10 to 5.00 $\mu$m, preferably 0.10 to 3.50 $\mu$m. When the average particle diameter of lithium-cobalt-based composite oxide particles obtained by performing the method for producing lithium-cobalt-based composite oxide particles of the present invention is within the above range, the weight and thickness of a positive electrode material can easily be reduced, which makes it easy to reduce the size of a battery.

Further, the CV value of lithium-cobalt-based composite oxide particles obtained by performing the method for producing lithium-cobalt-based composite oxide particles of the present invention is 0.60 or less, preferably 0.50 or less, particularly preferably 0.45 or less. When the CV value of lithium-cobalt-based composite oxide particles obtained by performing the method for producing lithium-cobalt-based composite oxide particles of the present invention is within the above range, variations in particle diameter are reduced, and therefore a problem during production of a positive electrode material is less likely to occur, and the effect of easily reducing the weight and thickness of a positive electrode material is enhanced.

Further, the weight loss on heating at 850°C of lithium-cobalt-based composite oxide particles obtained by performing the method for producing lithium-cobalt-based composite oxide particles of the present invention is 1.5 mass% or less, preferably 1.0 mass% or less, particularly preferably 0.5 mass% or less. When the weight loss on heating at 850°C of lithium-cobalt-based composite oxide particles obtained by performing the method for producing lithium-cobalt-based composite oxide particles of the present invention is within the above range, the reaction has sufficiently proceeded, and therefore a problem is less likely to occur during production of a positive electrode material, and a charge-discharge capacity expected of the lithium-cobalt-based composite oxide is less likely to reduce.

It should be noted that, in the present invention, the weight loss on heating at 850°C is calculated by the following formula.

$$\text{Weight loss (\%)} = ((X - Y) / X) \times 100$$

X represents the mass (g) of lithium-cobalt-based composite oxide particles before heating at 850°C.

Y represents the mass (g) of lithium-cobalt-based composite oxide particles heated to 850°C at a temperature rise rate of 100°C/h, maintained at 850°C for 5 hours after reaching 850°C, and then naturally cooled to room temperature.

Further, the residual alkali content of lithium-cobalt-based composite oxide particles obtained by performing the method for producing lithium-cobalt-based composite oxide particles of the present invention is 2.0% or less, preferably 1.0% or less. When the residual alkali content of lithium-cobalt-based composite oxide particles obtained by performing the method for producing lithium-cobalt-based composite oxide particles of the present invention is within the above range, the slurry stability of a coating material during electrode coating is enhanced, which enhances the effect of easily reducing the thickness of a positive electrode material.

It should be noted that, in the present invention, the residual alkali refers to an alkaline component dissolved in water when lithium-cobalt-based composite oxide particles as a sample to be measured are dispersed in water at 25°C and stirred. Examples of the alkaline component include lithium carbonate ($Li_2Co_3$) and lithium hydroxide (LiOH).

The residual alkali content is calculated in the following manner: 2 g of lithium-cobalt-based composite oxide particles and 50 g of ultrapure water are weighed in a beaker, the lithium-cobalt-based composite oxide particles are dispersed and stirred with a magnetic stirrer at 25°C for 5 minutes, and the dispersion liquid is then filtered and the amount of an alkali present in the obtained filtrate is calculated by neutralization titration. It should be noted that the residual alkali content is a value determined by measuring the amount of lithium by titration and expressing it in terms of lithium carbonate ($Li_2CO_3$).

Further, lithium-cobalt-based composite oxide particles obtained by performing the method for producing lithium-cobalt-based composite oxide particles of the present invention are lithium-cobalt-based composite oxide particles obtained by a solid-phase process.

Further, lithium-cobalt-based composite oxide particles obtained by performing the method for producing lithium-cobalt-based composite oxide particles of the present invention are composed of primary particles of a lithium-cobalt-based composite oxide or secondary particles formed by aggregating primary particles of a lithium-cobalt-based composite oxide or a mixture of primary particles and secondary particles of a lithium-cobalt-based composite oxide.

Further, lithium-cobalt-based composite oxide particles obtained by performing the method for producing lithium-cobalt-based composite oxide particles of the present invention are suitably used as a positive electrode active material for lithium secondary batteries, all-solid-state batteries, and the like.

Lithium-cobalt-based composite oxide particles obtained by performing the method for producing lithium-cobalt-based composite oxide particles of the present invention may further be mixed with a lithium-containing compound to further improve sinterability to obtain a lithium-cobalt-based composite oxide particle composition containing the lithium-cobalt-based composite oxide particles of the present invention and the lithium-containing compound.

Examples of the lithium-containing compound of the lithium cobalt-based composite oxide particle composition include lithium carbonate, lithium hydroxide, and lithium nitrate.

The average particle diameter of the lithium-containing compound to be mixed with the lithium-cobalt-based composite oxide particles is 0.10 to 100.0 $\mu$m, preferably 0.10 to 10.0 $\mu$m, more preferably 0.10 to 1.0 $\mu$m. Setting the average particle diameter of the lithium-containing compound to fall within the above range is preferred from the viewpoint that the lithium-containing compound can easily be dispersed uniformly in the lithium-cobalt-based composite oxide particle composition so that sintering can be achieved at much lower temperature.

The content of the lithium-containing compound in the lithium-cobalt-based composite oxide particle composition is 0.01 to 10.0 mass%, preferably 0.05 to 5.0 mass% in terms of lithium atom content relative to the mass of the lithium-cobalt-based composite oxide particles. Setting the lithium-containing compound content to fall within the above range is preferred from the viewpoint that sintering can be achieved at much lower temperature.

It should be noted that a method for mixing the lithium-cobalt-based composite oxide particles obtained by performing the method for producing lithium-cobalt-based composite oxide particles of the present invention and the lithium-containing compound is not limited as long as the respective components can uniformly be mixed, and the method may either be dry or wet.

Examples

Hereinbelow, the present invention will be described in more detail with reference to examples, but the present invention is not limited to these examples.

(1) Average particle diameter, standard deviation, and CV value as determined by SEM observation

One hundred primary particles were randomly selected under observation of particles to be measured with a scanning electron microscope (SEM), the horizontal Feret's diameter of each of the particles was measured, and the average of horizontal Feret's diameters of the 100 particles was determined as an average particle diameter.

One hundred primary particles were randomly selected under observation of particles to be measured with a scanning electron microscope (SEM), the horizontal Feret's diameter of each of the particles was measured, and a standard deviation and a CV value were determined on the basis of a particle size distribution obtained from the particle diameters of the 100 particles. It should be noted that the CV value was calculated by the formula of "CV value = standard deviation/average particle diameter".

(2) Weight loss on heating at 850°C

Weight loss on heating at 850°C was determined by the following formula.

$$\texttt{Weight loss (\%) = ((X - Y) / X)} \times 100$$

X: The mass (g) of lithium-cobalt-based composite oxide particles before heating at 850°C
Y: The mass (g) of lithium-cobalt-based composite oxide particles heated to 850°C at a temperature rise rate of 100°C/h, maintained at 850°C for 5 hours after reaching 850°C, and then naturally cooled to room temperature.

(3) Residual alkali content of lithium-cobalt-based composite oxide particles

Two grams of lithium-cobalt-based composite oxide particles and 50 g of pure water were weighed in a beaker, and the lithium-cobalt-based composite oxide particles were dispersed using a magnetic stirrer at 25°C for 5 minutes. Then, the dispersion liquid was filtered, and 30 mL of the filtrate was titrated with 0.1N-HCl using an automatic titrator (model: COMTITE-2500) to calculate the residual alkali content present in the sample (the amount of lithium measured and expressed in terms of lithium carbonate).

(4) Crystal phase

A crystal phase was measured by an X-ray diffractometer (manufactured by Rigaku Corporation, Ultima IV) using Cu-K$\alpha$ rays as a radiation source.

(5) D50

The particle size distribution of particles to be measured was measured by laser diffraction/scattering using water as a measurement solvent. The volume-based 50% particle diameter of the obtained particle size distribution was defined as D50 of the measurement object.

(Examples 1 to 6)

(Thermally decomposing step)

Cobalt hydroxide (average particle diameter as determined by SEM observation: 0.17 $\mu$m) was thermally decomposed at 300°C for 3 hours to obtain, as a thermally-decomposed product, cobalt oxide ($Co_3O_4$) having an average particle diameter as determined by SEM observation of 0.16 $\mu$m.

(Mixture preparing step)

The obtained thermally-decomposed product ($Co_3O_4$, average particle diameter as determined by SEM observation: 0.16 $\mu$m) and lithium carbonate (average particle diameter as determined by SEM observation: 7.0 $\mu$m) were weighed in such a manner that a Li/Co ratio was 1.00 and were then subjected to dry mixing and pulverizing treatment in a commercially-available table mixer to obtain 10.0 g of a mixture.

(Firing step)

The obtained mixture was fired at a firing temperature shown in Table 1 for 5 hours to obtain lithium-cobalt-based composite oxide particles. The obtained lithium-cobalt-based composite oxide particles were subjected to disintegrating treatment in the table mixer for 30 seconds to obtain lithium-cobalt-based composite oxide particles.

(Fired product pulverizing treatment step)

The obtained lithium-cobalt-based composite oxide particles were subjected to jet pulverizing treatment at a feed rate of 2 g/min in a jet mill (manufactured by Seishin Enterprise Co., Ltd., A-O Jet Mill) whose P pressure was set to 0.65 MPa and J pressure was set to 0.60 MPa to obtain lithium-cobalt-based composite oxide particles. Various physical properties of the obtained lithium-cobalt-based composite oxide particles are shown in Table 1. In each of Examples 1 to 6, the weight loss on heating at 850°C of the obtained lithium-cobalt-based composite oxide particles was 1.0 mass% or less.

(Examples 7 to 10)

(Thermally decomposing step)

Cobalt hydroxide (average particle diameter as determined by SEM observation: 0.17 $\mu$m) was thermally decomposed at 300°C for 3 hours to obtain, as a thermally-decomposed product, cobalt oxide ($Co_3O_4$) having an average particle diameter as determined by SEM observation of 0.16 $\mu$m.

(Mixture preparing step)

Pure water was added to lithium carbonate (average particle diameter as determined by SEM observation: 7.0 $\mu$m) to obtain a slurry with a concentration of 20 mass%, the slurry was subjected to wet mixing and pulverizing treatment in a bead mill (manufactured by Ashizawa Finetech Ltd., LMZ22) using $\phi$ 0.5 mm Zr balls to obtain a lithium carbonate slurry. The obtained lithium carbonate slurry was spray-dried at a feed rate of 60 g/min with the use of a spray drier (manufactured by OHKAWARA KAKOHKI CO., LTD., L-8) whose inlet temperature was set to 250°C and outlet temperature was set to 120°C, and was then subjected to jet pulverizing treatment at a feed rate of 2 g/min in a jet mill (manufactured by Seishin Enterprise Co., Ltd., A-O Jet Mill) whose P pressure was set to 0.65 MPa and J pressure was set to 0.60 MPa to obtain lithium carbonate fine particles having an average particle diameter as determined by SEM observation of 0.48 $\mu$m.

Then, the obtained thermally-decomposed product ($Co_3O_4$, average particle diameter as determined by SEM observation: 0.16 $\mu$m) and the obtained lithium carbonate fine particles (average particle diameter as determined by SEM observation: 0.48 $\mu$m) were weighed in such a manner that a Li/Co ratio was 1.00 and were then subjected to dry mixing and pulverizing treatment in a commercially-available table mixer to obtain 10.0 g of a mixture.

(Firing step)

The obtained mixture was fired at a firing temperature shown in Table 1 for 5 hours to obtain lithium-cobalt-based composite oxide particles. The obtained lithium-cobalt-based composite oxide particles were subjected to disintegrating treatment in a table mixer for 30 seconds to obtain lithium-cobalt-based composite oxide particles.

(Fired product pulverizing treatment step)

The obtained lithium-cobalt-based composite oxide particles were subjected to jet pulverizing treatment at a feed rate of 2 g/min in a jet mill (manufactured by Seishin Enterprise Co., Ltd., A-O Jet Mill) whose P pressure was set to 0.65 MPa and J pressure was set to 0.60 MPa to obtain lithium-cobalt-based composite oxide particles. Various physical properties of the obtained lithium-cobalt-based composite oxide particles are shown in Table 1. In each of Examples 7 to 10, the weight loss on heating at 850°C of the obtained lithium-cobalt-based composite oxide particles was 0.5 mass% or less.

(Comparative Examples 1 and 2)

(Mixture preparing step)

Cobalt hydroxide (average particle diameter as determined by SEM observation: 0.17 $\mu$m) and lithium carbonate (average particle diameter as determined by SEM observation: 7.0 $\mu$m) were weighed in such a manner that a Li/Co ratio was 1.00 and were then subjected to dry mixing and pulverizing treatment in a commercially-available table mixer to obtain 10.0 g of a raw material mixture.

(Firing step)

The obtained raw material mixture was fired at a firing temperature shown in Table 1 for 5 hours to obtain lithium-cobalt-based composite oxide particles. The obtained lithium-cobalt-based composite oxide particles were subjected to disintegrating treatment in a table mixer for 30 seconds to obtain lithium-cobalt-based composite oxide particles.

(Fired product pulverizing treatment step)

The obtained lithium-cobalt-based composite oxide particles were subjected to jet pulverizing treatment at a feed rate of 2 g/min in a jet mill (manufactured by Seishin Enterprise Co., Ltd., A-O Jet Mill) whose P pressure was set to 0.65 MPa and J pressure was set to 0.60 MPa to obtain lithium-cobalt-based composite oxide particles. Various physical properties of the obtained lithium-cobalt-based composite oxide particles are shown in Table 1.
That is, the thermally decomposing step was not performed in Comparative Examples 1 and 2.

[Table 1]

| | Average particle diameter of raw material cobalt compound as determined by SEM observation ($\mu$m) | Thermal decomposition temperature (°C) | Firing temperature (°C) |
|---|---|---|---|
| Example 1 | 0.17 | 300 | 550 |
| Example 2 | 0.17 | 300 | 600 |
| Example 3 | 0.17 | 300 | 650 |
| Example 4 | 0.17 | 300 | 700 |
| Example 5 | 0.17 | 300 | 750 |
| Example 6 | 0.17 | 300 | 850 |
| Example 7 | 0.17 | 300 | 600 |
| Example 8 | 0.17 | 300 | 700 |
| Example 9 | 0.17 | 300 | 750 |
| Example 10 | 0.17 | 300 | 850 |
| Comparative Example 1 | 0.17 | - | 600 |
| Comparative Example 2 | 0.17 | - | 700 |

[Table 2]

| | | Various physical properties of lithium-cobalt-based composite oxide particles | | | |
|---|---|---|---|---|---|
| | | Average particle diameter as determined by SEM observation (μm) | CV value | Residual alkali content (%) | Crystal phase (XRD) |
| | Example 1 | 0.20 | 0.31 | 0.79 | Single phase of hexagonal LCO |
| | Example 2 | 0.20 | 0.36 | 0.67 | Single phase of hexagonal LCO |
| | Example 3 | 0.22 | 0.30 | 0.54 | Single phase of hexagonal LCO |
| | Example 4 | 0.23 | 0.30 | 0.48 | Single phase of hexagonal LCO |
| | Example 5 | 0.24 | 0.31 | 0.42 | Single phase of hexagonal LCO |
| | Example 6 | - | - | 0.27 | Single phase of hexagonal LCO |
| | Example 7 | 0.19 | 0.33 | 0.46 | Single phase of hexagonal LCO |
| | Example 8 | 0.21 | 0.31 | 0.37 | Single phase of hexagonal LCO |
| | Example 9 | 0.23 | 0.33 | 0.31 | Single phase of hexagonal LCO |
| | Example 10 | - | - | 0.30 | Single phase of hexagonal LCO |
| | Comparative Example 1 | 0.20 | 0.33 | 3.59 | Mixed phase of hexagonal LCO/$Co_3O_4$ |
| | Comparative Example 2 | 0.29 | 0.42 | 1.42 | Mixed phase of hexagonal LCO/$Co_3O_4$ |
| Note) In the table, "-" in the columns of Various physical properties of lithium-cobalt-based composite oxide particles represents "not measured". | | | | | |

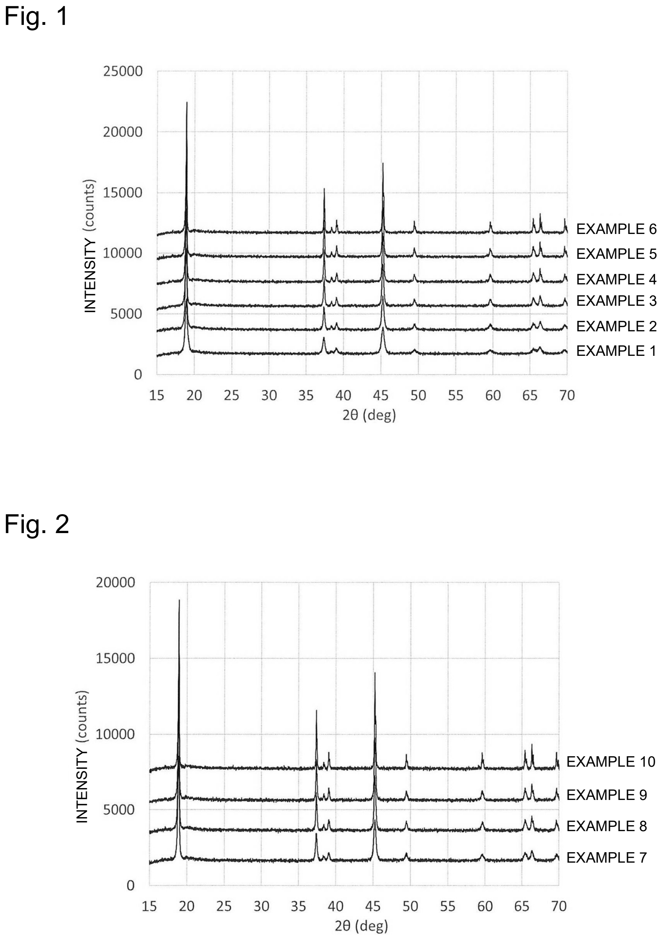

The results shown in Table 2 confirmed that the lithium-cobalt-based composite oxide particles obtained in each of Examples 1 to 10 had a small average particle diameter and a lower residual alkali content than the lithium-cobalt-based composite oxide particles obtained in Comparative Examples 1 and 2. Further, Figure 1 and Figure 2 confirmed that in all of Examples, the crystal phase was a hexagonal single phase. Further, Examples 1, 2, and 7 confirmed that even when firing was performed at a low temperature of 550 to 600°C, the crystal phase was a single phase of hexagonal LCO.

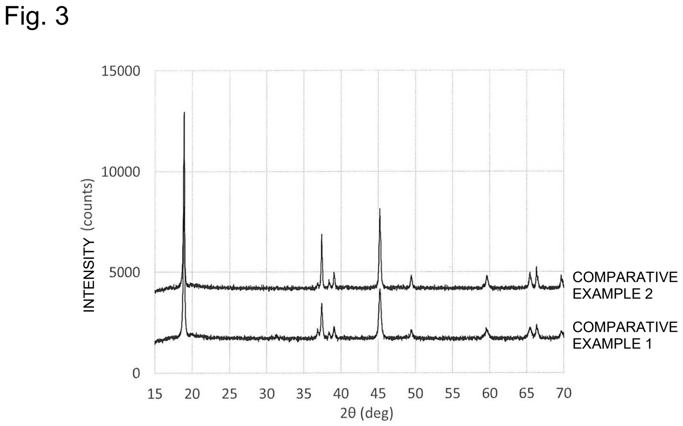

On the other hand, Figure 3 confirmed that the lithium-cobalt-based composite oxide particles obtained in Comparative Examples 1 and 2 had a mixed phase of hexagonal LCO and tricobalt tetraoxide.

(Examples 11 to 13)

An oxide of cobalt was obtained by performing the thermally decomposing step in the same manner as in Examples 1 to 6 except that cobalt hydroxide (average particle diameter as determined by SEM observation: 0.17 μm) was thermally decomposed at a temperature shown in Table 3 in the thermally decomposing step, and then the mixture preparing step, the firing step (firing temperature: 700°C), and the fired product pulverizing treatment step were performed to obtain lithium-cobalt-based composite oxide particles. Various physical properties of the obtained oxide of cobalt and the obtained lithium-cobalt-based composite oxide particles are shown in Table 3.

(Comparative Example 3)

Lithium-cobalt-based composite oxide particles were obtained by performing the mixture preparing step, the firing step (firing temperature: 700°C), and the fired product pulverizing treatment step in the same manner as in Comparative Examples 1 and 2 except that commercially-available cobalt oxide (average particle diameter as determined by SEM observation: 0.62 μm, standard deviation: 0.46, CV value: 0.75) was used instead of cobalt hydroxide. Various physical properties of the obtained lithium-cobalt-based composite oxide particles are shown in Table 3.

That is, the thermally decomposing step was not performed in Comparative Example 3.

[Table 3]

| | Thermal decomposition temperature (°C) | Average particle diameter of oxide of cobalt as determined by SEM observation (μm) | CV value of oxide of cobalt | Firing temperature (°C) | Various physical properties of lithium-cobalt-based composite oxide particles | | | |
|---|---|---|---|---|---|---|---|---|
| | | | | | Average particle diameter as determined by SEM observation (μm) | CV value | Residual alkali content (%) | Crystal phase (XRD) |
| Example 4 | 300 | 0.17 | 0.36 | 700 | 0.23 | 0.30 | 0.48 | Single phase of hexagonal LCO |
| Example 11 | 200 | 0.16 | 0.31 | 700 | 0.23 | 0.33 | 0.65 | Single phase of hexagonal LCO |
| Example 12 | 700 | 0.24 | 0.32 | 700 | 0.34 | 0.30 | 0.24 | Single phase of hexagonal LCO |
| Example 13 | 1000 | 2.70 | 0.48 | 700 | 2.69 | 0.40 | 0.08 | Single phase of hexagonal LCO |
| Comparative Example 3 | - | 0.62 | 0.75 | 700 | 1.33 | 0.93 | 0.16 | Mixed phase of hexagonal LCO (R-3m)/cubic LCO (Fd3m) |

**Claims**

1. A method for producing lithium-cobalt-based composite oxide particles, the method comprising:

   a thermally decomposing step of thermally decomposing a raw material cobalt compound having an average particle diameter as determined by SEM observation of 0.05 to 1.00 $\mu$m to obtain an oxide of cobalt, the raw material cobalt being cobalt hydroxide or a salt of cobalt;
   a mixture preparing step of preparing a mixture containing at least a lithium compound and the oxide of cobalt obtained in the thermally decomposing step; and
   a firing step of firing the mixture prepared in the mixture preparing step at 500 to 850°C.

2. The method for producing lithium-cobalt-based composite oxide particles according to claim 1, wherein the raw material cobalt compound is cobalt hydroxide.

3. The method for producing lithium-cobalt-based composite oxide particles according to claim 1 or 2, wherein the lithium compound is at least one selected from among a carbonate, a hydroxide, an acetate, and a nitrate of lithium.

4. The method for producing lithium-cobalt-based composite oxide particles according to claim 1 or 2, wherein in the thermally decomposing step, thermal decomposition is performed at 200 to 1000°C.

5. The method for producing lithium-cobalt-based composite oxide particles according to claim 1 or 2, wherein the oxide of cobalt has an average particle diameter as determined by SEM observation of 0.05 to 4.00 $\mu$m.

6. The method for producing lithium-cobalt-based composite oxide particles according to claim 1 or 2, wherein after the firing step, a fired product pulverizing treatment step is performed in which lithium-cobalt-based composite oxide particles obtained by performing the firing step are subjected to pulverizing treatment.

7. The method for producing lithium-cobalt-based composite oxide particles according to claim 1 or 2, wherein lithium-cobalt-based composite oxide particles obtained by performing the method for producing a lithium-cobalt-based composite oxide according to claim 1 or 2 have an average particle diameter as determined by SEM observation of 0.10 to 5.00 $\mu$m and show a weight loss on heating at 850°C of 1.5 mass% or less.

8. The method for producing lithium-cobalt-based composite oxide particles according to claim 1 or 2, wherein lithium-cobalt-based composite oxide particles obtained by performing the method for producing a lithium-cobalt-based composite oxide according to claim 1 or 2 have a residual alkali content of 2.0% or less.

9. The method for producing lithium-cobalt-based composite oxide particles according to claim 1 or 2, wherein lithium-cobalt-based composite oxide particles obtained by performing the method for producing a lithium-cobalt-based composite oxide according to claim 1 or 2 have a CV value of an average particle diameter as determined by SEM observation of 0.60 or less, and when the lithium-cobalt-based composite oxide particles are subjected to X-ray diffraction analysis, an impurity phase other than a hexagonal crystal phase (R-3m) derived from a lithium-cobalt-based composite oxide does not appear.

10. The method for producing lithium-cobalt-based composite oxide particles according to claim 1 or 2, wherein lithium-cobalt-based composite oxide particles obtained by performing the method for producing a lithium-cobalt-based composite oxide according to claim 1 or 2 are lithium-cobalt- based composite oxide particles obtained by a solid-phase process.

Fig. 1

Fig. 2

Fig. 3

## INTERNATIONAL SEARCH REPORT

| International application No. |
| --- |
| **PCT/JP2024/019900** |

| | |
| --- | --- |
| **A. CLASSIFICATION OF SUBJECT MATTER** | |

*C01G 51/00*(2006.01)i; *H01M 4/525*(2010.01)i
FI:   C01G51/00 A; H01M4/525

According to International Patent Classification (IPC) or to both national classification and IPC

**B. FIELDS SEARCHED**

Minimum documentation searched (classification system followed by classification symbols)

C01G51/00; H01M4/525

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 10-324522 A (TODA KOGYO CORP.) 08 December 1998 (1998-12-08) | 1-6, 10 |
| | claims, paragraphs [0009]-[0010], [0015]-[0020], table 1 | |
| A | | 7-9 |
| A | WO 2012/029730 A1 (NIPPON CHEMICAL INDUSTRIAL CO., LTD.) 08 March 2012 (2012-03-08) | 1-10 |
| A | WO 2004/088776 A1 (SEIMI CHEMICAL CO., LTD.) 14 October 2004 (2004-10-14) | 1-10 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 July 2024** | **30 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
**Information on patent family members**

International application No.

**PCT/JP2024/019900**

| Patent document cited in search report | | | Publication date (day/month/year) | Patent family member(s) | | | Publication date (day/month/year) |
|---|---|---|---|---|---|---|---|
| JP | 10-324522 | A | 08 December 1998 | US | 6103213 | A | |
| | | | | claims, column 6, lines 23-34, column 8, line 55 to column 10, line 19, table 1 | | | |
| | | | | EP | 867408 | A1 | |
| WO | 2012/029730 | A1 | 08 March 2012 | CN | 103189316 | A | |
| | | | | KR | 10-2013-0101000 | A | |
| WO | 2004/088776 | A1 | 14 October 2004 | US | 2005/0220701 | A1 | |
| | | | | CN | 1701452 | A | |
| | | | | KR | 10-2005-0044770 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019220468 A
- JP 2008105912 A